# EUROPÄISCHE PATENTSCHRIFT

(11) **EP 2 664 835 B1**
(45) Veröffentlichungstag und Bekanntmachung des Hinweises auf die Patenterteilung: **18.03.2015**
(21) Anmeldenummer: 13166622.4
(22) Anmeldetag: 06.05.2013
(51) Int. Cl.: F16L 53/00, B29C 47/06, B29C 47/02

(54) **Verfahren zur Herstellung eines beheizbaren Rohrs, beheizbares Rohr und Verwendung dieses**
Method for producing a heatable pipe, heatable pipe and use thereof
Procédé de fabrication d'un tube pouvant être chauffé, tube pouvant être chauffé et son utilisation

(30) Priorität: 14.05.2012 DE 102012208020
(43) Veröffentlichungstag der Anmeldung: 20.11.2013
(73) Patentinhaber: Evonik Industries AG, 45128 Essen (DE); Voss Automotive GmbH, 51688 Wipperfürth (DE)
(72) Erfinder: Göring, Rainer, 46325 Borken (DE); Böer, Michael, 59399 Olfen (DE); Franosch, Juergen, 45770 Marl (DE); Westmeier, Jörg, 47803 Krefeld (DE); Schwarzkopf, Otfried, 51515 Kürten (DE); de Beer, Daniel, 51766 Engelskirchen (DE)

(56) Entgegenhaltungen:
- EP-A2- 0 312 204
- DE-A1-102011 018 243

## Beschreibung

Gegenstand der vorliegenden Erfindung ist ein Verfahren zur Herstellung eines beheizbaren Rohres zur Aufbewahrung oder Beförderung eines zu beheizenden flüssigen oder gasförmigen Mediums, bei dem mindestens zwei Stromleiter als Elektroden in eine Schicht aus einer elektrisch leitfähigen Formmasse eingebettet sind.

Beim Transport flüssiger oder gasförmiger Medien durch ein Rohr ergibt sich häufig die Notwendigkeit, die Temperatur des Mediums oberhalb einer bestimmten Mindesttemperatur zu halten. Derartige Rohre sind üblicherweise aus Kunststoffmaterialien aufgebaut; sie müssen auf eine Weise beheizt werden können, die zum einen an das Medium als auch zum anderen an das Rohrmaterial angepasst ist. Beispiele hierfür sind Leitungen für Dieselkraftstoff, bei denen ein Ausflocken von Paraffinbestandteilen bei winterlichen Temperaturen verhindert werden muss, Leitungen für Brennstoffzellensysteme sowie SCR-Leitungen.

Dieselfahrzeuge besitzen einen Katalysator, der mit Hilfe einer wässrigen Harnstofflösung mittels selektiver katalytischer Reduktion ("selective catalytic reduction"; SCR) die Entstickung der Abgase bewirkt, um die Stickoxidemissionen zu senken. Die verwendete wässrige Harnstofflösung, von der Industrie einheitlich mit AdBlue^{®} bezeichnet, friert allerdings bei Temperaturen von -11 °C und darunter ein. Bei diesen Temperaturen ist daher der Transport der Harnstofflösung vom Vorratsbehälter zum Katalysator nicht mehr gewährleistet; damit ist auch eine Entstickung des Abgases nicht mehr möglich. Um auch bei tiefen Temperaturen das Einfrieren des AdBlue^{®} zu verhindern, müssen die Leitungen beheizbar sein und innerhalb eines Zeitraums von ca. 10 Minuten ein Auftauen des AdBlue^{®} sicherstellen.

Es gibt verschiedene Möglichkeiten, derartige Leitungen zu erwärmen. Häufig werden derzeit normale Widerstandsheizungen um das Fluidrohr gewickelt (WO 2009/052849). Das ist allerdings störanfällig; zudem muss der Widerstand der Drahtwicklung der Leitungslänge und den Einbau- und Umgebungsbedingungen angepasst werden.

Eine elegante Möglichkeit, eine derartige Leitung zu beheizen, wird in der WO 2006/097765, der WO 2006/090182, der DE 39 00 821 C1 sowie der EP 0 306 638 A1 beschrieben. Es handelt sich hier jeweils um ein Mehrschichtrohr, in dem zwei Leiter vorhanden sind, die längs des Rohres verlaufen und um 180° versetzt zueinander in einer leitfähigen Polymerschicht eingebettet sind. Aufgrund des Stromflusses von einem Leiter zum anderen erfolgt die Erwärmung in der leitfähigen Schicht. Diese Anordnung hat gegenüber der einfachen Widerstandheizung erhebliche technische und wirtschaftliche Vorteile. Dabei ist aber die direkte Einbettung der Leiter in das Kunststoffmaterial und damit der elektrische Kontakt zwischen Matrix und Leiter erforderlich. Allerdings ist das exakte Einbringen der Litze oder des Drahtes in diese Schicht sehr schwierig und wird mit kleineren Durchmessern problematischer. Zudem weisen derartige Leitungen eine verschlechterte Biegsamkeit auf. Es besteht zudem die Gefahr, dass sich beim Thermoformen, beim Verlegen der Leitung z. B. in einem Fahrzeug bei engen Biegeradien (Biegebelastung), beim mehrfachen Einfrieren und Wiederauftauen (Tieftemperaturverformung) und beim längeren Gebrauch der Kontakt der leitfähigen Formmasse zu den Leitern verändert. Damit ändert sich der Elektronenübergang vom Draht oder der Litze zur leitfähigen Formmasse, was natürlich einen negativen Einfluss auf die Aufheizfähigkeit der Leitung hat.

Eine bessere Biegsamkeit der Leitung erhält man bei spiraliger Wicklung der Elektroden. In der EP 0 312 204 A2 wird eine beheizbare Leitung offenbart, bei der zwei Elektroden spiralig um das Rohr gewickelt und in eine elektrisch leitende Schicht eingebettet sind. Die Einbettung wird dadurch erzeugt, dass die Elektroden zuerst mit der leitfähigen Formmasse beschichtet werden; anschließend werden sie um das Innenrohr gewickelt und dann über einen Querspritzkopf mit der leitfähigen Formmasse ummantelt. Auf diese Weise wird der Kontaktwiderstand zwischen den Elektroden und der leitfähigen Schicht minimiert. Allerdings ist das Verfahren der Einbettung aufwendig. Für die Beschichtung der Elektroden wird eine leichtfließende leitfähige Formmasse benötigt, während die Formmasse für die Ummantelung als relativ dicke Schicht aufgetragen werden muss. Die EP 0 312 204 A2 sieht vor, dass die Oberfläche der leitfähigen Ummantelungsschicht eine glatte Zylinderform hat; auch die dortigen Abbildungen zeigen, dass sich die Leiterdrähte nicht nach außen abdrücken.

Es stellte sich die Aufgabe, die Nachteile des Standes der Technik zu vermeiden und insbesondere ein Leitungsrohr zur Verfügung zu stellen, bei dem einerseits eine gute und dauerhafte Anbindung zwischen den Elektroden und der elektrisch leitfähigen Polymermatrix mit daraus resultierendem geringem Kontaktwiderstand vorliegt und andererseits die Lage der Elektroden leicht detektierbar ist, damit sie an den gewünschten Stellen über eine Kupplung kontaktiert und mit Strom beaufschlagt werden können.

Diese Aufgabe wurde durch ein Verfahren zur Herstellung eines beheizbaren Leitungsrohres gelöst, das folgende Schritte enthält:
a) Ein zweischichtiges Rohr mit einer elektrisch isolierenden Innenschicht und einer ersten elektrisch leitfähigen Schicht wird extrudiert,
b) mindestens zwei Stromleiter als Elektroden werden um die erste elektrisch leitfähige Schicht spiralig gewickelt,
c) die erste elektrisch leitfähige Schicht mit den aufgewickelten Stromleitern wird optional erhitzt, so dass sie an der Oberfläche erweicht und die Stromleiter eingedrückt und eingebunden werden,
d) eine zweite Schicht aus einer elektrisch leitfähigen Formmasse wird durch Extrusion aufgebracht, wobei die Dicke dieser Schicht 0,1 bis 1,5 mm, vorzugsweise 0,2 bis 1 mm und besonders bevorzugt 0,2 bis 0,8 mm beträgt,
e) eine äußere Ummantelung aus einem elektrisch isolierenden Kunststoffmaterial wird aufgebracht.

Durch die Einbettung der Stromleiter zwischen den beiden elektrisch leitfähigen Schichten wird der elektrische Kontaktwiderstand verringert.

Der Außendurchmesser sowie die Wandstärke sind grundsätzlich keinen Beschränkungen unterworfen; sie richten sich alleine nach dem Anwendungszweck. Generell sind jedoch Außendurchmesser im Bereich von 2,5 bis 50 mm, vorzugsweise von 3 bis 30 mm und besonders bevorzugt von 4 bis 25 mm bevorzugt, während die Wandstärken vorzugsweise im Bereich von 0,8 bis 4 mm, besonders bevorzugt im Bereich von 1 bis 3 mm und insbesondere bevorzugt im Bereich von 1 bis 2,5 mm liegen. Hierbei werden die Wellenberge, die von den sich nach außen durchdrückenden Stromleitern herrühren, nicht berücksichtigt. Beispielhafte Ausführungen, jeweils ausgedrückt in Außendurchmesser x Wandstärke, sind:
- Für SCR-Leitungen: 3 mm x 1 mm, 4 mm x 1 mm, 5 mm x 1 mm, 8 mm x 1 mm oder 12 mm x 1,5 mm;
- für Dieselleitungen: 6 mm x 1 mm, 8 mm x 1 mm, 10 mm x 1,5 mm oder 25 mm x 2,5 mm;
- Leitungen für die Gaszuführung von Brennstoffzellen in Fahrzeugen: 4 mm x 1 mm, 5 mm x 1 mm, 8 mm x 1 mm, 10 mm x 1 mm oder 12 mm x 1,5 mm.

Bei diesen beispielhaften Ausführungen sind aber auch alle Zwischenbereiche genauso möglich; somit sind die gesamten Bereiche offenbart.

Die Wandstärke und der Außendurchmesser kann bei Ausführungsformen, bei denen die äußere Ummantelung zur thermischen Isolierung geschäumt ist, im Einzelfall auch höher liegen. In solchen Fällen kann die Wandstärke durchaus bis etwa 15 mm betragen.

Die elektrisch isolierende Innenschicht ist im einfachsten Ausführungsfall einschichtig. Sie kann aber auch mehrschichtig sein und dann aus mehreren Subschichten wie beispielsweise aus einer innersten Subschicht und einer Haftvermittler-Subschicht bestehen. Es sind jedoch auch Ausführungsformen mit noch mehr Subschichten möglich, beispielsweise mit einer innersten Subschicht, einer Haftvermittler-Subschicht, einer Subschicht, die als Sperrschicht gegen das zu befördernde Medium oder Komponenten hiervon fungiert, und einer Haftvermittlerschicht zur Anbindung an die erste elektrisch leitfähige Schicht.

Die isolierende Innenschicht besitzt vorzugsweise eine Dicke von 0,1 bis 1,5 mm, besonders bevorzugt von 0,1 bis 1 mm und insbesondere bevorzugt von 0,15 bis 0,5 mm. Dies schließt auch die Ausführungsform ein, bei der die isolierende Innenschicht aus mehreren Subschichten besteht.

Das im Schritt a) extrudierte zweischichtige Rohr mit einer elektrisch isolierenden Innenschicht und einer ersten elektrisch leitfähigen Schicht wird vorzugsweise in einem einzigen Verfahrensschritt durch Coextrusion hergestellt. Es ist jedoch auch möglich, zuerst ein Rohr zu extrudieren, das nur aus der elektrisch isolierenden Innenschicht besteht, und auf dieses dann die elektrisch leitfähige Schicht aufzubringen, beispielsweise mittels eines Querspritzkopfes.

Die als Elektroden eingesetzten Stromleiter sind beispielsweise Drähte, Litzen oder Bänder. Sie können aus jedem ausreichend leitfähigen und ausreichend beständigen Metall bestehen, beispielsweise aus Kupfer, Silber oder Aluminium. Sie können medienresistent beschichtet sein, vorzugsweise mit Zinn oder Nickel. Im Betrieb werden die Elektroden unterschiedlich gepolt; die Potentialdifferenz zwischen den Elektroden führt dann zu einem Stromfluss durch die beiden elektrisch leitfähigen Schichten, wobei Wärme entsteht.

Die Stromleiter besitzen vorzugsweise eine Dicke im Bereich von 0,1 bis 2 mm, besonders bevorzugt im Bereich von 0,2 bis 1 mm und insbesondere bevorzugt im Bereich von 0,3 bis 0,8 mm. Bei Stromleitern, die keinen kreisrunden Querschnitt besitzen, etwa bei flachen Litzen oder Bändern, wird hierunter die geringste Dicke verstanden.

Die Stromleiter werden unter Vorspannung aufgewickelt; diese beträgt vorzugsweise mindestens 5 N, besonders bevorzugt mindestens 10 N und insbesondere bevorzugt mindestens 15 N. Die Vorspannung führt nicht nur zu einem festen Sitz der Stromleiter, sondern bewirkt im optionalen nächsten Schritt auch, dass die Stromleiter beim Erhitzen der ersten elektrisch leitfähigen Schicht in diese eingedrückt werden.

Die Stromleiter werden so aufgewickelt, dass die beiden unterschiedlich gepolten Leiter voneinander einen Abstand vorzugsweise im Bereich von 2 bis 20 mm und besonders bevorzugt im Bereich von 6 bis 16 mm besitzen. Dabei verläuft der Stromfluss innerhalb der elektrisch leitfähigen Schichten bei senkrechten Leiterabständen, die kleiner als der halbe Umfang der leitfähigen Schichten sind, auf direktem Weg, mit axialen und radialen Anteilen, in senkrechter Richtung zwischen den Stromleitern.

Zur Fixierung der Stromleiter auf dem Rohr können entsprechend geeignete Haftvermittler oder Klebstoffe genutzt werden. Ebenso ist eine mechanische Fixierung durch Fäden oder Bänder möglich.

Das Erhitzen im optionalen Schritt c) kann nach jeder geeigneten Methode durchgeführt werden; es kann beispielsweise durch IR-Strahlung, Hochfrequenz- bzw. Mikrowellenerwärmung, induktiv oder durch Heißgas erfolgen. In einer bevorzugten Ausführungsform erfolgt es durch Beflammen; hierdurch wird zudem die Haftung zwischen erster und zweiter elektrisch leitfähiger Schicht verbessert. Die Hitze kann auch beim Aufextrudieren der zweiten elektrisch leitfähigen Schicht in Form des Wärmeinhalts der Schmelze eingebracht werden; Voraussetzung hierfür ist aber, dass die aufgebrachte Schmelze sich auf ausreichend hoher Temperatur befindet, um ein Erweichen der Oberfläche der ersten elektrisch leitfähigen Schicht zu bewirken. In dieser Ausführungsform fallen die Verfahrensschritte c) und d) zusammen.

Beim Eindrücken und Einbinden der Stromleiter wird das Metall des Drahts oder der Litze von Schmelze umflossen und benetzt. Nach dem Erstarren haftet die Matrix der Formmasse auf dem Metall. Hierdurch wird der elektrische Kontaktwiderstand noch weiter minimiert.

Beim Aufbringen der zweiten elektrisch leitfähigen Schicht wird die Schmelze vorzugsweise über einen Querspritzkopf oder mittels Wickelextrusion aufextrudiert.

Im Verfahrensschritt e) kann die äußere Ummantelung aus einem elektrisch isolierenden Kunststoffmaterial ebenfalls beispielsweise über einen Querspritzkopf oder im Mehrschichtextrusionsverfahren aufextrudiert werden. Eine Vereinfachung des Verfahrens kann dadurch erfolgen, dass die zweite Schicht aus einer elektrisch leitfähigen Formmasse sowie die äußere Ummantelung zusammen als Zweischichtverbund aufextrudiert werden. Bei dieser Ausführungsform fallen die Verfahrensschritte d) und e) zusammen. Da aber häufig keine formschlüssige bzw. stoffschlüssige Haftung zwischen der zweiten elektrisch leitfähigen Schicht und der äußeren Ummantelung benötigt wird, kann alternativ auch ein glattes Rohr oder ein Wellrohr als äußere Ummantelung über das Rohr geschoben werden.

Das Material der Innenschicht und der beiden elektrisch leitfähigen Schichten ist eine thermoplastische Formmasse. Die Formmasse kann beispielsweise auf Basis von Polyamiden, Polyolefinen, Fluorpolymeren oder Polyurethan aufgebaut sein. Der Begriff "auf Basis von" drückt hier sowie an anderer Stelle aus, dass die Formmasse zu mindestens 40 Gew.-%, bevorzugt zu mindestens 50 Gew.-% und besonders bevorzugt zu mindestens 60 Gew.-% aus dem genannten Polymeren besteht.

Das Polyamid ist herstellbar aus einer Kombination von Diamin und Dicarbonsäure, aus einer w-Aminocarbonsäure oder dem entsprechenden Lactam. Grundsätzlich kann jedes Polyamid verwendet werden, beispielsweise PA6 oder PA66. In einer bevorzugten Ausführungsform enthalten die Monomereinheiten des Polyamids im Mittel mindestens 8, mindestens 9 bzw. mindestens 10 C-Atome. Bei Polyamiden, die sich von Gemischen von Lactamen herleiten, wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Als Polyamid kann vorteilhafterweise auch ein teilaromatisches Polyamid verwendet werden, dessen Dicarbonsäureanteil zu 5 bis 100 Mol-% von aromatischer Dicarbonsäure mit 8 bis 22 C-Atomen herrührt und das einen Kristallitschmelzpunkt Tₘ von mindestens 260 °C, vorzugsweise von mindestens 270 °C und besonders bevorzugt von mindestens 280 °C besitzt. Derartige Polyamide werden üblicherweise als PPA bezeichnet. Sie sind herstellbar aus einer Kombination von Diamin und Dicarbonsäure, gegebenenfalls unter Zusatz einer ω-Aminocarbonsäure oder des entsprechenden Lactams. Geeignete Typen sind beispielsweise PA66/6T, PA6/6T, PA6T/MPMDT (MPMD steht für 2-Methylpentamethylendiamin), PA9T, PA10T, PA11T, PA12T, PA14T sowie Copolykondensate dieser letzten Typen mit einem aliphatischen Diamin und einer aliphatischen Dicarbonsäure oder mit einer ω-Aminocarbonsäure bzw. einem Lactam.

Das Polyamid kann auch ein Polyetheresteramid oder ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN^{®} D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombinationen PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer bevorzugten Ausführungsform wird eine Mischung aus 30 bis 99 Gew.-%, besonders bevorzugt 40 bis 98 Gew.-% und insbesondere bevorzugt 50 bis 96 Gew.-% Polyamid im engeren Sinne sowie 1 bis 70 Gew.-%, besonders bevorzugt 2 bis 60 Gew.-% und insbesondere bevorzugt 4 bis 50 Gew.-% Polyetheresteramid und/oder Polyetheramid verwendet. Polyetheramide sind hierbei bevorzugt.

Neben Polyamid kann die Formmasse weitere Komponenten enthalten wie z.B. Schlagzähmodifikatoren, andere Thermoplaste, Weichmacher und andere übliche Zusatzstoffe. Erforderlich ist nur, dass das Polyamid die Matrix der Formmasse bildet.

Das Polyolefin kann in erster Linie ein Polyethylen, insbesondere ein Polyethylen hoher Dichte (HDPE), oder ein isotaktisches oder syndiotaktisches Polypropylen sein. Das Polypropylen kann ein Homo- oder ein Copolymer sein, beispielsweise mit Ethylen oder 1-Buten als Comonomer, wobei Random- als auch Blockcopolymere eingesetzt werden können. Darüber hinaus kann das Polypropylen auch schlagzähmodifiziert sein, beispielsweise dem Stand der Technik entsprechend mittels Ethylen-Propylen-Kautschuk (EPM) oder EPDM. Das ebenfalls erfindungsgemäß verwendbare syndiotaktische Polystyrol kann auf bekannte Weise durch metallocenkatalysierte Polymerisation von Styrol hergestellt werden.

Das Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Chlortrifluorethylen-Perfluoralkylvinylether-Tetrafluorethylen-Copolymer (CPT), ein Tetrafluorethylen-Hexafluorpropen-Copolymer (FEP) oder ein Tetrafluorethylen-Perfluoralkylvinylether-Copolymer (PFA) sein. In Frage kommen auch Copolymere auf Basis von Vinylidenfluorid, die bis zu 40 Gew.-% andere Monomere aufweisen wie beispielsweise Trifluorethylen, Chlortrifluorethylen, Ethylen, Propen und Hexafluorpropen.

Eventuell vorhandene Sperrschichten können beispielsweise aus Ethylen-Vinylalkohol-Copolymeren (EVOH), Polyethylennaphthalat, Polybutylennaphthalat oder Polyphenylensulfid (PPS) bestehen.

Die erste und die zweite elektrisch leitfähige Schicht bestehen vorteilhaft aus der gleichen Formmasse. Auf diese Weise ist sichergestellt, dass eine gute Schichtenhaftung erzielt werden kann. Es können aber auch unterschiedliche Formmassen verwendet werden unter der Voraussetzung, dass diese gut aufeinander haften.

Die elektrische Leitfähigkeit der Kunststoffformmasse wird auf bekannte Weise erreicht, beispielsweise durch Zusatz von Leitfähigkeitsruß, Graphitpulver und/oder Graphitfibrillen (Carbon Nanotubes). Der spezifische Durchgangswiderstand dieser Kunststoffformmasse liegt im Bereich von 10⁻³ bis 10¹⁰ Ωm, vorzugsweise im Bereich von 10⁻² bis 10⁸ Ωm, besonders bevorzugt im Bereich von 10⁻¹ bis 10⁷ Ωm und insbesondere bevorzugt im Bereich von 10⁰ bis 10⁶ Ωm, wobei im Bereich von 10⁴ Ωm und darüber nach DIN IEC 60093 und im Bereich unterhalb von 10⁴ Ωm nach EN ISO 3915 gemessen wird.

Zur Verbesserung der elektrischen Leitfähigkeit bzw. zur Absenkung der Perkolationsschwelle kann die leitfähige Kunststoffformmasse darüber hinaus ein Salz mit einem nichtmetallischen Kation, ein Dispergiermittel auf Basis von Estern oder Amiden oder eine Mischung aus beiden enthalten. Geeignete Salze mit nichtmetallischem Kation, Dispergiermittel auf Basis von Estern oder Amiden sowie deren Einsatzmengen sind in der deutschen Patentanmeldung mit dem Anmeldeaktenzeichen 102 01 0043470.1 vom 05.11.2010 offenbart; der diesbezügliche Offenbarungsgehalt dieser Patentanmeldung ist Bestandteil der Offenbarung der vorliegenden Patentanmeldung.

In vielen Anwendungsfällen, beispielsweise bei Kraftfahrzeug- und Nutzfahrzeugsystemen, ist die zur Verfügung stehende Spannung nicht konstant. Trotzdem muss bei einer niedrigen Spannung die nötige Aufheizleistung gewährleistet sein. Bei hohen Spannungen darf hingegen die maximal zulässige Temperatur nicht überschritten werden. Die elektrisch leitfähige Formmasse ist daher vorzugsweise so ausgelegt, dass sie einen PTC-Effekt ("positive temperature coefficient") aufweist. Mit steigender Temperatur erhöht sich hierbei der Widerstand der Formmasse. Dieser Effekt ergibt sich insbesondere bei Verwendung von Leitfähigkeitsruß und/oder Graphit als leitfähiges Additiv. Der Effekt stellt eine immanente Sicherheit dar, da er bei steigender Spannung einer übermäßigen Temperaturerhöhung der Leitung entgegenwirkt. Dies ist wichtig, um nicht über einen Zündpunkt, einen Flammpunkt oder eine Zersetzungstemperatur des zu transportierenden Mediums zu geraten oder das Leitungsmaterial selbst nicht thermisch zu schädigen.

Das erfindungsgemäße Verfahren besitzt einen weiteren entscheidenden Vorteil. Nach dem Verfahrensschritt a) kann die Leitfähigkeit der ersten elektrisch leitfähigen Schicht gemessen werden. Je nach Leitfähigkeit dieser Schicht kann im Verfahrensschritt d) die Dicke der zweiten elektrisch leitfähigen Schicht variiert werden, um die für das Erwärmen notwendige Leitfähigkeit des Rohres zu erlangen. Damit können Änderungen in der Leitfähigkeit der Formmasse, die nicht auszuschließen sind, und die beispielsweise von Unterschieden in der eingesetzten Rußpartie oder Dosierschwankungen bei der Compoundierung herrühren, ausgeglichen werden. Die Leitfähigkeit des Systems nimmt mit zunehmender Dicke der leitfähigen Schichten zu. Eine weitere Möglichkeit, die Leitfähigkeit des Systems zu ändern, besteht in der Variation des Stromleiterabstandes.

Durch die erfindungsgemäß geringe Dicke der zweiten elektrisch leitfähigen Schicht zeichnen sich nach Durchführung des Schrittes d) die Stromleiter auf der Rohroberfläche durch einen Wellenberg deutlich ab. Dabei handelt es sich um einen gewollten und nicht etwa zufälligen Effekt. Die Lage der Leiter ist damit leicht zu bestimmen. Sie können dann an den Stellen, an denen sie kontaktiert werden müssen, um sie über eine Kupplung mit Strom zu versorgen, leicht detektiert und freigelegt werden. Die Differenz zwischen Wellenberg und Wellental beträgt vorzugsweise 0,1 bis 1,2 mm, besonders bevorzugt 0,2 bis 0,8 mm und insbesondere bevorzugt 0,3 bis 0,5 mm.

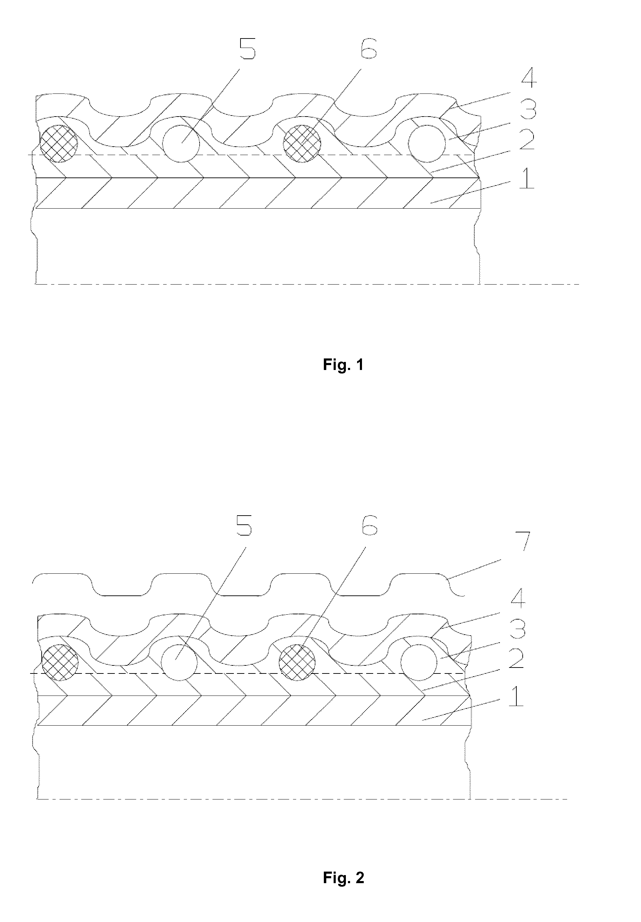

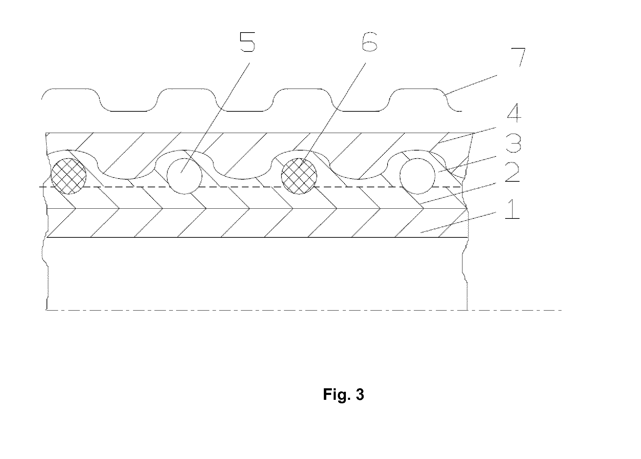

Diese wellenförmige Kontur besitzt weitere Vorteile. Sie dient in einer Ausführungsform dem Formschluss für noch anzubringende Anbindungskonturen. Wenn im Verfahrensschritt e) eine äußere Ummantelung aus einer elektrisch isolierenden Formmasse über einen Querspritzkopf aufgebracht wird, ist diese durch die Kontur auch ohne Vorliegen einer Schichtenhaftung fixiert. Auf diese Weise kann die äußere Ummantelung an den Stellen, an denen die Stromleiter anschließend freigelegt und kontaktiert werden müssen, leicht entfernt werden. Um dies weiter zu erleichtern, kann die äußere Ummantelung zumindest an den entsprechenden Stellen eingekerbt oder perforiert sein, so dass durch leichtes Einschneiden ein Ein- bzw. Durchreißen und Abziehen der Schicht möglich ist. Eine entsprechende Ausführungsform ist in der Fig. 1 dargestellt. Dort folgen eine elektrisch isolierende Innenschicht 1, eine erste elektrisch leitfähige Schicht 2, eine zweite elektrisch leitfähige Schicht 3 und eine äußere Ummantelung 4 direkt aufeinander. Die äußere Ummantelung 4 kann beispielsweise über einen Querspritzkopf im Schlauchverfahren aufgebracht werden; die Vorgehensweise ist dem einschlägigen Fachmann wohlbekannt. Die Adhäsion zwischen der Schicht 3 und der Ummantelung 4 kann gegebenenfalls gering sein oder auch ganz fehlen; der Formschluss bewirkt eine ausreichende Fixierung. In die beiden elektrisch leitfähigen Schichten 2 und 3 ist ein spiralig aufgewickeltes Leiterpaar 5 und 6 eingebettet, das im Betrieb eine entgegengesetzte Polung besitzt. In der Fig. 2 schließt sich an die äußere Ummantelung 4 noch eine weitere äußere Ummantelung 7 an, die beispielsweise über einen Querspritzkopf aufgebracht und über einen Wellrohrabzug ausgeformt wird. Die Wellenberge der Ummantelung 7 brauchen nicht die gleiche Lage und insbesondere auch nicht den gleichen Abstand voneinander zu haben wie die Wellenberge der Ummantelung 4. Ein anderer Fall ist in der Fig. 3 dargestellt; dort wird die äußere Ummantelung 4 mittels Druckverfahren aufgebracht, woraus eine glatte Oberfläche resultiert. Hieran schließt sich noch eine weitere äußere Ummantelung 7 an, für die das Gleiche gilt wie bei der Ausführung gemäß Fig. 2.

In einer weiteren Ausführungsform können die entstehenden Wellenberge als "Stützpunkte" für ein übergestülptes glattes Rohr oder Wellrohr dienen; die Fixierung dieser äußeren Ummantelung erfolgt dann durch Kraftschluss. Die hierbei entstehenden Zwischenräume, insbesondere in den Wellentälern, enthalten isolierende Luft oder generell eingeschlossenes Isolationsgas und ermöglichen gleichzeitig eine schneckenförmige Zirkulation des eingeschlossenen Gases, so dass eine gleichmäßige Temperierung der Leitung durch den radialen und axialen Gasaustausch realisiert wird. Durch die nicht verfüllten Wellentäler erzielt man gleichzeitig eine Material- und damit auch Gewichtseinsparung. Ein übergestülptes Rohr kann auch aufgeschrumpft werden; es ist dann zusätzlich durch Formschluss fixiert.

In allen diesen Ausführungsformen kann die äußere Ummantelung entweder aus kompaktem Material oder aus geschäumtem Material bestehen. Bei der Variante mit geschäumtem Material ist die äußere Ummantelung vorzugsweise geschlossenporig. Sie kann zusätzlich mit einer dünnen Deckschicht bzw. Deckhaut umhüllt sein; dies ist insbesondere dann sinnvoll, wenn die äußere Ummantelung aus offenporigem Schaum besteht, um eine Aufnahme von Wasser, Öl, Schmutz oder dergleichen in die Struktur zu vermeiden. Geeignete Materialien sind beispielsweise Formmassen auf Basis von Polyamiden, Polyolefinen, Fluorpolymeren oder Polyurethan sowie thermoplastische Elastomere.

Die anspruchsgemäße Leitung ist einfach herzustellen und einfach zu konfektionieren und zu installieren. Sie weist darüber hinaus den Vorteil auf, dass ein Abfallen der Heizleistung über die Lebensdauer hinweg wirkungsvoll unterbunden werden kann.

Gegenstand der Erfindung ist auch das nach dem erfindungsgemäßen Verfahren hergestellte beheizbare Leitungsrohr sowie dessen Verwendung zur Herstellung einer SCR-Leitung, einer Leitung für Dieselkraftstoff oder einer Leitung für Brennstoffzellensysteme. Hierzu muss das Leitungsrohr noch konfektioniert werden, das heißt zu einer vollständig funktionsfähigen Leitung vervollständigt werden, beispielsweise durch Anbringen von Verbindungselementen, Konnektoren, Clipsen, Haltern, Kabeln, Steckern oder Dichtringen sowie durch Thermoformen der Leitung, um der Leitung eine konstruktiv vorgegebene, räumlich gewundene Form zu verleihen.

## Patentansprüche

1. Verfahren zur Herstellung eines beheizbaren Leitungsrohres, das folgende Schritte enthält:
a) Ein zweischichtiges Rohr mit einer elektrisch isolierenden Innenschicht und einer ersten elektrisch leitfähigen Schicht wird extrudiert,
b) mindestens zwei Stromleiter werden um die erste elektrisch leitfähige Schicht spiralig gewickelt,
d) eine zweite Schicht aus einer elektrisch leitfähigen Formmasse wird durch Extrusion aufgebracht, wobei die Dicke dieser Schicht 0,1 bis 1,5 mm beträgt,
e) eine äußere Ummantelung aus einem elektrisch isolierenden Kunststoffmaterial wird aufgebracht.

2. Verfahren gemäß Anspruch 1, **dadurch gekennzeichnet, dass** zwischen den Schritten b) und d) folgender Schritt durchgeführt wird:
c) die erste elektrisch leitfähige Schicht mit den aufgewickelten Stromleitern wird erhitzt, so dass sie an der Oberfläche erweicht und die Stromleiter eingedrückt und eingebunden werden.

3. Verfahren gemäß einem der vorhergehenden Ansprüche,
**dadurch gekennzeichnet,**
**dass** die elektrisch isolierende Innenschicht einschichtig ist oder aus mehreren Subschichten besteht.

4. Verfahren gemäß einem der vorhergehenden Ansprüche,
**dadurch gekennzeichnet,**
**dass** die Stromleiter Drähte, Litzen oder Bänder sind.

5. Verfahren gemäß einem der vorhergehenden Ansprüche, **dadurch gekennzeichnet, dass** die Stromleiter eine Dicke im Bereich von 0,1 bis 2 mm besitzen.

6. Verfahren gemäß einem der vorhergehenden Ansprüche,
**dadurch gekennzeichnet,**
**dass** nach Durchführung des Schrittes d) sich die Stromleiter auf der Rohroberfläche durch einen Wellenberg abzeichnen.

7. Verfahren gemäß Anspruch 6,
**dadurch gekennzeichnet,**
**dass** die Wellenberge 0,1 bis 1,2 mm hoch sind.

8. Verfahren gemäß einem der vorhergehenden Ansprüche,
**dadurch gekennzeichnet,**
**dass** die Formmasse der ersten sowie der zweiten elektrisch leitfähigen Schicht Leitfähigkeitsruß, Graphitpulver und/oder Graphitfibrillen enthält.

9. Verfahren gemäß einem der vorhergehenden Ansprüche,
**dadurch gekennzeichnet,**
**dass** die Formmasse der ersten sowie der zweiten elektrisch leitfähigen Schicht einen spezifischen Durchgangswiderstand im Bereich von 10⁻³ bis 10¹⁰ Ωm hat, wobei im Bereich von 10⁴ Ωm und darüber nach DIN IEC 60093 und im Bereich unterhalb von 10⁴ Ωm nach EN ISO 3915 gemessen wird.

10. Beheizbares Leitungsrohr, hergestellt gemäß einem der vorhergehenden Ansprüche.

11. Verwendung des beheizbaren Leitungsrohrs gemäß Anspruch 10 zur Herstellung einer SCR-Leitung, einer Leitung für Dieselkraftstoff oder einer Leitung für ein Brennstoffzellensystem.

## Claims

1. Method for producing a heatable line pipe, comprising the following steps:
a) a two-layer pipe having an electrically insulating inner layer and a first electrically conductive layer is extruded,
b) at least two current leads are wound spirally around the first electrically conductive layer,
d) a second layer of an electrically conductive moulding composition is applied by extrusion, the thickness of this layer being 0.1 to 1.5 mm,
e) an outer cladding of an electrically insulating plastic material is applied.

2. Method according to Claim 1, **characterized in that** the following step is carried out between steps b) and d):
c) the first electrically conductive layer with the current leads applied by winding is heated, so that it softens on the surface and the current leads are pressed in and bound in.

3. Method according to either of the preceding claims, **characterized in that** the electrically insulating inner layer is single-layer or consists of a plurality of sublayers.

4. Method according to any of the preceding claims, **characterized in that** the current leads are wires, stranded cords or ribbons.

5. Method according to any of the preceding claims, **characterized in that** the current leads possess a thickness in the range from 0.1 to 2 mm.

6. Method according to any of the preceding claims, **characterized in that** after step d) has been carried out, the current leads show through on the pipe surface in the form of a wave peak.

7. Method according to Claim 6, **characterized in that** the wave peaks are 0.1 to 1.2 mm high.

8. Method according to any of the preceding claims, **characterized in that** the moulding composition of the first and second electrically conductive layers comprises conductive carbon black, graphite powder and/or graphite fibrils.

9. Method according to any of the preceding claims, **characterized in that** the moulding composition of the first and second electrically conductive layers has a volume resistivity in the range from 10⁻⁶ to 10¹⁰ Ωm, as measured in accordance with DIN IEC 60093 in the range of 10⁴ Ωm and above, and in accordance with EN ISO 3915 in the range below 10⁴ Ωm.

10. Heatable line pipe produced according to any of the preceding claims.

11. Use of the heatable line pipe according to Claim 10 for producing an SCR line, a line for diesel fuel or a line for a fuel cell system.

## Revendications

1. Procédé de fabrication d'un tuyau apte à être chauffé, le procédé comportant les étapes suivantes :
a) un tube en deux couches présentant une couche intérieure électriquement isolée et une première couche électriquement conductrice est extrudé,
b) au moins deux conducteurs de courant sont enroulés en spirale autour de la première couche électriquement conductrice,
d) une deuxième couche constituée d'une pâte de moulage électriquement conductrice est appliquée par extrusion, l'épaisseur de cette couche étant de 0,1 à 1,5 mm et
e) une enveloppe extérieure en une matière synthétique électriquement isolante est appliquée.

2. Procédé selon la revendication 1, **caractérisé en ce que** l'étape suivante :
c) la première couche électriquement conductrice est chauffée avec des conducteurs de courant enroulés de telle sorte qu'elle d'amollisse en surface et que les conducteurs de courant soient repoussés et incorporés
est exécutée entre les étapes b) et d).

3. Procédé selon l'une des revendications précédentes, **caractérisé en ce que** la couche intérieure électriquement isolante est une couche unique ou est constituée de plusieurs sous-couches.

4. Procédé selon l'une des revendications précédentes, **caractérisé en ce que** les conducteurs de courant sont des fils, des tresses ou des rubans.

5. Procédé selon l'une des revendications précédentes, **caractérisé en ce que** les conducteurs de courant ont une épaisseur de l'ordre de 0,1 à 2 mm.

6. Procédé selon l'une des revendications précédentes, **caractérisé en ce qu'**après l'exécution de l'étape d), les conducteurs de courant se manifestent sur la surface du tube par le sommet d'une ondulation.

7. Procédé selon la revendication 6, **caractérisé en ce que** les sommets des ondulations ont une hauteur de 0,1 à 1,2 mm.

8. Procédé selon l'une des revendications précédentes, **caractérisé en ce que** la pâte de moulage de la première et de la deuxième couche électriquement conductrices contient du noir de carbone conducteur, de la poudre de graphite et/ou des fibrilles de graphite.

9. Procédé selon l'une des revendications précédentes, **caractérisé en ce que** la pâte de moulage de la première et de la deuxième couche électriquement conductrices possède une résistance spécifique au passage de l'ordre de 10⁻³ à 10¹⁰ Ωm, la mesure étant effectuée selon DIN IEC 60093 dans la plage de 10⁴ Ωm et plus et selon EN ISO 3915 dans la plage inférieure à 10⁴ Ωm.

10. Tuyau apte à être chauffé, fabriqué selon l'une des revendications précédentes.

11. Utilisation du tuyau apte à être chauffé selon la revendication 10 pour former un tuyau SCR, un tuyau pour carburant diesel ou un tuyau pour système de cellules à combustible.
